# EUROPEAN PATENT APPLICATION

(11) **EP 4 804 692 A1**
(43) Date of publication of application: **09.09.2026**
(21) Application number: 24886234.4
(22) Date of filing: 30.10.2024
(51) Int. Cl.: H04W 72/232, H04L 1/1812, H04L 1/1867, H04W 72/0453, H04W 72/1273

(54) **METHOD PERFORMED BY UE OR BASE STATION IN WIRELESS COMMUNICATION SYSTEM, AND APPARATUS THEREFOR**

(30) Priority: 01.11.2023 US 202363546760 P
(71) Applicant: LG Electronics Inc., Yeongdeungpo-gu Seoul 07336 (KR)
(72) Inventor: YANG, Suckchel, Seoul 06772 (KR); KIM, Seonwook, Seoul 06772 (KR)
(74) Representative: Plasseraud IP
(86) International application number: PCT/KR2024/016752
(87) International publication number: WO 2025/095561

(57) **Abstract**

A method performed by UE, according to an embodiment of the present disclosure, comprises: receiving DCI for scheduling a plurality of PDSCHs on a plurality of cells; receiving, on the basis of the DCI, the PDSCHs on the plurality of cells; and transmitting a HARQ-ACK codebook including a plurality of HARQ-ACKs for the plurality of PDSCHs, wherein the plurality of HARQ-ACKs are mapped in a cell index order in the HARQ-ACK codebook, the DCI provides, to one or more cells other than the plurality of cells, a specific FDRA value other than a valid FDRA value for PDSCH scheduling, on the basis of the DCI providing information for SCell dormancy indication, the UE maps, to the HARQ-ACK codebook, an ACK for the SCell dormancy indication together with the plurality of HARQ-ACKs, and a mapping position of the ACK for the SCell dormancy indication in the HARQ-ACK codebook may be determined on the basis of a cell index of a first cell having the smallest cell index among the one or more cells to which the specific FDRA value is provided.

## Description

### TECHNICAL FIELD

The present disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In Release 16 New Radio (NR), a secondary cell (SCell) dormancy indication was introduced for power saving of a user equipment (UE), and the UE may reduce power consumption by omitting monitoring of a physical downlink control channel (PDCCH) for an SCell for which dormancy is indicated. However, channel state information (CSI) measurement and radio resource management (RRM) measurement are performed for the corresponding SCell. Such an SCell dormancy indication is transmitted through downlink control information (DCI) that does not schedule a physical downlink shared channel (PDSCH), and the UE transmits a 1-bit acknowledgement (ACK) for the SCell dormancy indication.

In Release 18 NR, the introduction of multi-cell scheduling (MC) DCI for scheduling multiple cells using a single DCI is under discussion.

### DISCLOSURE

### Technical Problem

An object of the present disclosure is to provide a method of efficiently performing wireless signal transmission/reception procedures and an apparatus therefor. For example, a method for configuring a hybrid automatic repeat request-acknowledgement (HARQ-ACK) for a secondary cell (SCell) dormancy indication through multi-cell scheduling (MC) downlink control information (DCI) and an apparatus therefor may be provided.

The technical problem to be solved is not limited thereto, and other technical problems not mentioned herein can be derived from the following description.

### Technical Solution

In an aspect of the present disclosure, a method performed by a user equipment (UE) is provided. The method includes: receiving downlink control information (DCI) for scheduling a plurality of physical downlink shared channels (PDSCHs) on a plurality of cells; receiving the plurality of PDSCHs on the plurality of cells based on the DCI; and transmitting a hybrid automatic repeat request-acknowledgement (HARQ-ACK) codebook including a plurality of HARQ-ACKs for the plurality of PDSCHs. The plurality of HARQ-ACKs may be mapped in a cell index order in the HARQ-ACK codebook. Based on that (i) the DCI provides a specific frequency domain resource allocation (FDRA) value for at least one cell other than the plurality of cells, the specific FDRA value being not a valid FDRA value for PDSCH scheduling, and (ii) the DCI provides information for a secondary cell (SCell) dormancy indication, the UE may map an acknowledgement (ACK) for the SCell dormancy indication in the HARQ-ACK codebook together with the plurality of HARQ-ACKs. A mapping position of the ACK for the SCell dormancy indication in the HARQ-ACK codebook may be determined based on a cell index of a first cell having a smallest cell index among the at least one cell for which the specific FDRA value is provided.

In the HARQ-ACK codebook, the plurality of HARQ-ACKs and the ACK for the SCell dormancy indication may be arranged in a cell index order based on cell indices of the plurality of cells and the cell index of the first cell.

In the HARQ-ACK codebook, the ACK for the SCell dormancy indication may be mapped to a HARQ-ACK for one transport block (TB) of the first cell.

For remaining cells other than the first cell among the at least one cell for which the specific FDRA value is provided, no ACK may be mapped in the HARQ-ACK codebook.

In the DCI providing the information for the SCell dormancy indication, a one-shot HARQ-ACK request field may not be provided or may have a value of 0, a HARQ-ACK retransmission indicator field may not be provided or may have a value of 0, and the specific FDRA value may be set in FDRA information for the at least one cell.

The information for the SCell dormancy indication may be provided through modulation and coding scheme (MCS) information, new data indicator (NDI) information, and redundancy version (RV) information for a first TB of the first cell having the smallest cell index among the at least one cell for which the specific FDRA value is provided.

The HARQ-ACK codebook may be a Type-2 HARQ-ACK codebook.

A size of the HARQ-ACK codebook is determined based on at least one of a maximum number of cells capable of being scheduled together through the DCI and a maximum number of transport blocks (TBs).

A PDSCH may not be scheduled through the DCI on the at least one cell for which the specific FDRA value is provided.

In another aspect of the present disclosure, provided is a non-transitory computer-readable recording medium having recorded thereon instructions that, when executed by a processor of a UE, cause the UE to perform the above-described method.

In another aspect of the present disclosure, a device is provided. The device includes: a memory storing instructions; and a processor configured to perform operations by executing the instructions. The operations of the processor include: receiving DCI for scheduling a plurality of PDSCHs on a plurality of cells; receiving the plurality of PDSCHs on the plurality of cells based on the DCI; and transmitting a HARQ-ACK codebook including a plurality of HARQ-ACKs for the plurality of PDSCHs. The plurality of HARQ-ACKs may be mapped in a cell index order in the HARQ-ACK codebook. Based on that (i) the DCI provides a specific FDRA value for at least one cell other than the plurality of cells, the specific FDRA value being not a valid FDRA value for PDSCH scheduling, and (ii) the DCI provides information for an SCell dormancy indication, the device may map an ACK for the SCell dormancy indication in the HARQ-ACK codebook together with the plurality of HARQ-ACKs. A mapping position of the ACK for the SCell dormancy indication in the HARQ-ACK codebook may be determined based on a cell index of a first cell having a smallest cell index among the at least one cell for which the specific FDRA value is provided.

The device may further include a transceiver, and the device may be a UE for wireless communication.

The device may be a processing device configured to control a UE for wireless communication.

In another aspect of the present disclosure, a method performed by a base station (BS) is provided. The method includes: transmitting DCI for scheduling a plurality of PDSCHs on a plurality of cells; transmitting the plurality of PDSCHs on the plurality of cells; and receiving a HARQ-ACK codebook including a plurality of HARQ-ACKs for the plurality of PDSCHs. The plurality of HARQ-ACKs may be mapped in a cell index order in the HARQ-ACK codebook. Based on that (i) the DCI provides a specific FDRA value for at least one cell other than the plurality of cells, the specific FDRA value being not a valid FDRA value for PDSCH scheduling, and (ii) the DCI provides information for an SCell dormancy indication, the BS may receive an ACK for the SCell dormancy indication together with the plurality of HARQ-ACKs through the HARQ-ACK codebook. A mapping position of the ACK for the SCell dormancy indication in the HARQ-ACK codebook is determined based on a cell index of a first cell having a smallest cell index among the at least one cell for which the specific FDRA value is provided.

In a further aspect of the present disclosure, a BS is provided. The BS includes: a memory storing instructions; and a processor configured to perform operations by executing the instructions. The operations of the processor include: transmitting DCI for scheduling a plurality of PDSCHs on a plurality of cells; transmitting the plurality of PDSCHs on the plurality of cells; and receiving a HARQ-ACK codebook including a plurality of HARQ-ACKs for the plurality of PDSCHs. The plurality of HARQ-ACKs may be mapped in a cell index order in the HARQ-ACK codebook. Based on that (i) the DCI provides a specific FDRA value for at least one cell other than the plurality of cells, the specific FDRA value being not a valid FDRA value for PDSCH scheduling, and (ii) the DCI provides information for an SCell dormancy indication, the BS may receive an ACK for the SCell dormancy indication together with the plurality of HARQ-ACKs through the HARQ-ACK codebook. A mapping position of the ACK for the SCell dormancy indication in the HARQ-ACK codebook may be determined based on a cell index of a first cell having a smallest cell index among the at least one cell for which the specific FDRA value is provided.

### Advantageous Effects

According to the present disclosure, wireless signal transmission and reception may be efficiently performed in a wireless communication system. For example, when an SCell dormancy indication is indicated through MC DCI, a method for configuring a HARQ-ACK therefor may be defined, thereby resolving ambiguity and enabling a more accurate and efficient SCell dormancy indication.

Effects obtainable from the present disclosure are not limited to the effects described above, and other effects not mentioned above may be inferred from the following description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDCCH/PDSCH reception and acknowledgment/negative acknowledgment (ACK/NACK) transmission process.
FIG. 6 illustrates an exemplary physical uplink shared channel (PUSCH) transmission process.
FIG. 7 illustrates an example of carrier aggregation.
FIG. 8 illustrates an exemplary wireless communication system supporting an unlicensed band.
FIG. 9 is a diagram for explaining HARQ-ACK codebook configurations according to an embodiment.
FIG. 10 is a diagram for explaining a method for transmitting and receiving signals in a network system according to an embodiment.
FIG. 11 illustrates a flow of a method performed by a user equipment (UE) according to an embodiment.
FIG. 12 illustrates a flow of a method performed by a base station (BS) according to an embodiment.
FIGS. 13 to 16 illustrate a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

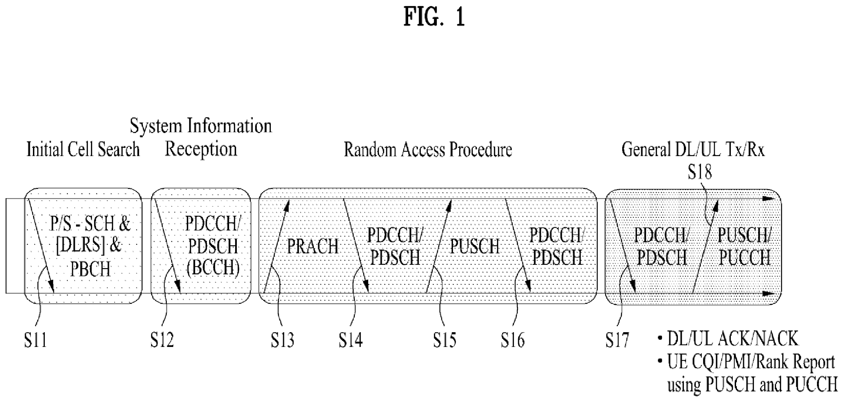

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC_INACTIVE, SCell time alignment, system information request, beam failure recovery, or UL resource request. However, the random access procedure is not limited thereto. The UE may acquire UL synchronization and/or UL transmission resources from the random access procedure.

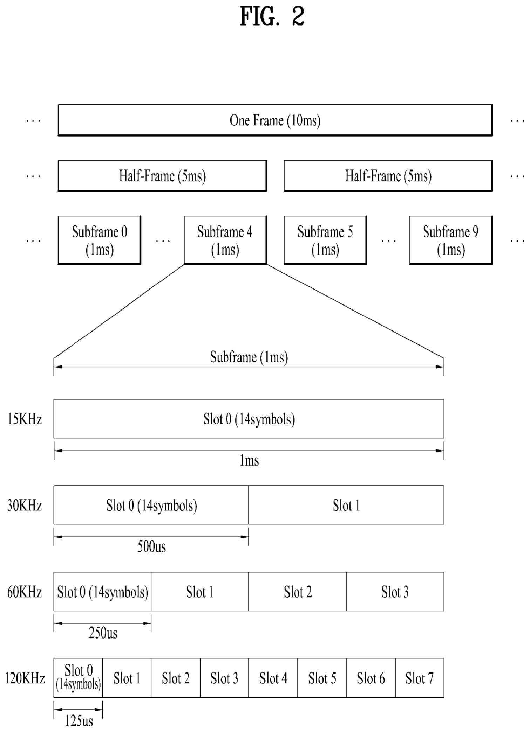

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N ^{slot}_{symb}: Number of symbols in a slot * N ^{frame,u}ₛₗₒₜ: Number of slots in a frame * N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

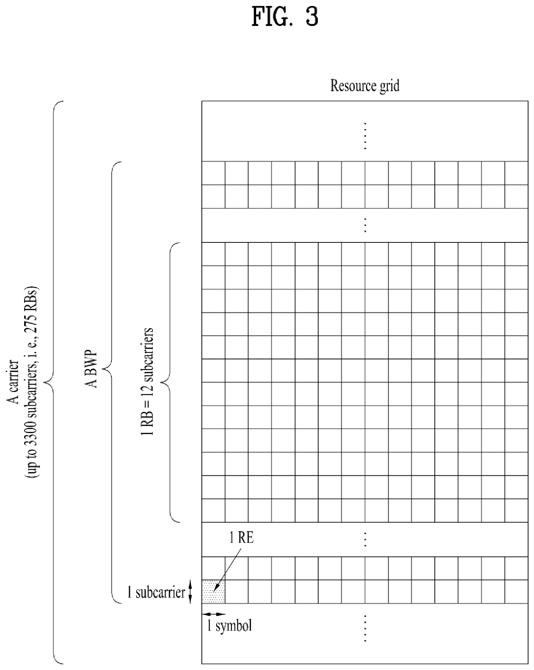

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

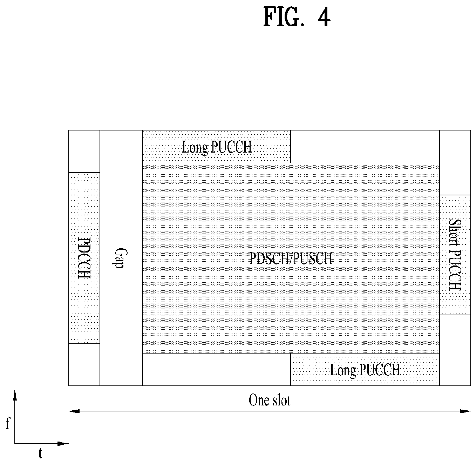

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters
- controlResourceSetId: A CORESET related to an SS
- monitoringSlotPeriodicityAndOffset: A PDCCH monitoring periodicity (in slots) and a PDCCH monitoring offset (in slots)
- monitoringSymbolsWithinSlot: PDCCH monitoring symbols in a slot (e.g., the first symbol(s) of a CORESET)
- nrofCandidates: The number of PDCCH candidates (one of 0, 1, 2, 3, 4, 5, 6, and 8) for each AL={1, 2, 4, 8, 16}
   * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols ${N}_{symb}^{PUCCH}$ | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1 - 2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

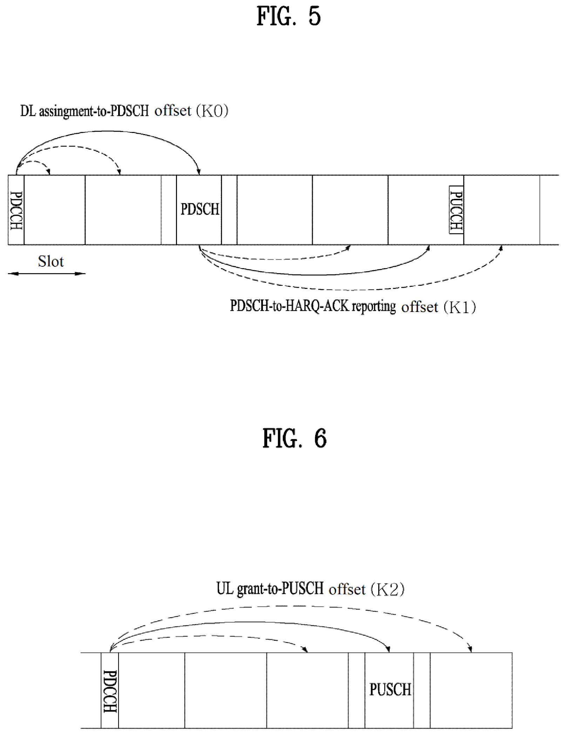

FIG. 5 illustrates an exemplary PDCCH/PDSCH reception and ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.
- Frequency domain resource assignment: Indicates an RB set assigned to a PDSCH
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

On the other hand, an HARQ-ACK codebook is largely defined into three codebook types: Type-1, Type-2, and Type-3 according to an HARQ-ACK bit (payload) configuration method. In the case of the Type-1 codebook, an HARQ-ACK payload is configured according to a combination of a candidate HARQ-ACK timing (K1) set (configured for a corresponding cell) and a candidate PDSCH occasion (SLIV) set (e.g., a codebook of a semi-static fixed size based on RRC signaling). In the case of the Type-2 codebook, a codebook size may be changed dynamically depending on the number of PDSCHs actually scheduled or the number of corresponding resource allocations (e.g., downlink assignment index, DAI). In the case of the Type-3 codebook, an HARQ-ACK payload is configured by mapping an HARQ-ACK bit related to a corresponding HPN for each HARQ Process Number (HPN) according to a maximum HARQ process(es) number (configured for a corresponding cell per cell) (e.g., one-shot A/N reporting). Recently, an enhanced Type-3 codebook is added to the recent NR standard as a form of the Type-3 codebook. The enhanced Type-3 codebook is not a method of reporting an HARQ-ACK bit for all cells/HPNs at a time to reduce signaling overhead, but a method of reporting an HARQ-ACK bit for all cells/HPNs indicated to a Base Station (BS) among all cells/HPNs. Subsets of cells/HPNs associated with the enhanced Type-3 codebook are configured for a user equipment (UE) through higher layer signaling, and then one of the subsets configured for the UE may be indicated through DCI that triggers the enhanced Type-3 codebook. The UE may report an HARQ-ACK for the cells/HPNs belonging to the indicated subset.

In the case of the Type-1 codebook, a combination of all SLIVs that can be transmitted (or scheduled to be transmitted) within a DL slot before K1 slots from an A/N transmission slot for each K1 value is calculated in a state that a set of a plurality (e.g., N) of candidate K1 values (for a corresponding cell per cell), an A/N sub-payload (including a determination of an A/N bit position/order corresponding to each SLIV that can be transmitted within the corresponding slot) is configured (which is defined as "SLIV Pruning"), and an entire A/N codebook is then configured by concatenating such an A/N sub-payload to N K1 values. In this case, the set of (N) DL slots corresponding to each K1 value may be defined as a bundling window corresponding to the A/N transmission slot.

In the case of the Type-2 HARQ-ACK codebook, a codebook for transmitting HARQ-ACK information on the same PUCCH/PUSCH is defined based on a Counter-Downlink Assignment Indicator (C-DAI) indicated by an actually transmitted PDCCH and a Total-DAI (T-DAI) value. That is, the codebook is configured based on PDCCH information actually transmitted to a UE. When the UE fails in detection of a specific PDCCH, the UE transmits an NACK on a bit for the corresponding PDCCH among bits defined in the codebook. In this case, whether the PDCCH detection fails may be recognized by the UE through the C-DAI and the T-DAI value. The C-DAI is obtained by counting the accumulated number of {serving cell index, PDCCH monitoring occasion}-pairs provided by PDSCH receptions up to a current serving cell and a current PDCCH monitoring occasion. First, for a plurality of PDSCH receptions for the same {serving cell index, PDCCH monitoring occasion}-pair, a PDSCH with which a reception starts first is counted first (i.e., a lower C-DAI value is assigned). Next, when there are a plurality of pairs having the same PDCCH monitoring occasion index among different {serving cell index, PDCCH monitoring occasion}-pairs, a pair having a lower serving cell index is counted first. Next, when there are a plurality of pairs having the same serving cell index among different {serving cell index, PDCCH monitoring occasion}-pairs, a PDCCH monitoring occasion of a lower index is counted first.

In the case of the Type-3 codebook, specifically, one of Mode 1 for feeding back an HARQ-ACK and an NDI corresponding to the HARQ-ACK together and Mode 2 for feeding back only the HARQ-ACK without the NDI may be configured for the UE from the BS. When the UE is configured with Mode 1, it operates to feed back, per HARQ Process Number (HPN), an HARQ-ACK for a PDSCH reception of the corresponding HPN and an NDI (indicated through a DCI) together.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information
- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### Carrier aggregation

NR may support a wider uplink/downlink bandwidth by aggregating a plurality of uplink/downlink carriers (i.e., carrier aggregation). It is possible to transmit/receive signals in a plurality of carriers through carrier aggregation. When carrier aggregation is applied, each carrier (see FIG. A2) may be referred to as a Component Carrier (CC). CCs may be contiguous or non-contiguous to each other in the frequency domain. A bandwidth of each CC may be determined independently. Asymmetric carrier aggregation in which the number of UL CCs is different from the number of DL CCs is also possible.
- PCell (Primary Cell): In the case of a UE configured with carrier aggregation, a cell operating at a primary frequency (e.g., Primary Component Carrier (PCC)) at which the UE performs an initial connection establishment procedure or initiates a connection re-establishment procedure. In the case of Dual Connectivity (DC), a Master Cell Group (MCG) cell operating at a primary frequency at which the UE performs an initial connection establishment procedure or initiates a connection re-establishment procedure.
- Secondary Cell (SCell): In the case of a UE configured with carrier aggregation, a cell that provides a radio resource additionally other than a special cell.
- Primary SCG Cell (PSCell): In the case of DC, a Secondary Cell Group (SCG) cell in which a UE performs a random access when performing an RRC reconfiguration and synchronization process.
- Special Cell (SpCell): In the case of DC, a special cell represents a PCell of MCG or a PSCell of SCG. Otherwise (i.e., non-DC), a special cell represents a PCell.
- Serving Cell (ServCell): Indicates a cell configured for a UE in an RRC_CONNECTED state. If CA/DA is not configured, only one serving cell (i.e., PCell) exists. If CA/DA is configured, a serving cell represents a cell set including special cell(s) and all SCells.

Meanwhile, control information may be configured to be transmitted and received only through a specific cell. For example, UCI may be transmitted through a special cell (e.g., PCell). When an SCell (hereinafter, PUCCH-SCell) for which a PUCCH transmission is allowed is configured, UCI may also be transmitted through the PUCCH-SCell. For another example, a BS may allocate a scheduling cell (set) to reduce PDCCH Blind Decoding (BD) complexity at a UE side. For PDSCH reception/PUSCH transmission, a UE may perform PDCCH detection/decoding only in a scheduling cell. In addition, the BS may transmit a PDCCH only through the scheduling cell (set). For example, a PDCCH for downlink allocation may be transmitted in cell #0 (i.e., a scheduling cell), and a corresponding PDSCH may be transmitted in cell #2 (i.e., a scheduled cell) (Cross-Carrier Scheduling (CCS)). The scheduling cell (set) may be configured in a UE-specific, UE-group-specific, or cell-specific manner. The scheduling cell includes a special cell (e.g., PCell).

For the cross-carrier scheduling, a Carrier Indicator Field (CIF) is used. The CIF may be semi-statically disabled/enabled by UE-specific (or UE group-specific) higher layer (e.g., Radio Resource Control (RRC)) signaling. A CIF field is an x-bit field (e.g., x=3) in a PDCCH (i.e., DCI) and may be used to indicate a (serving) cell index of a scheduled cell.
- CIF disabled: A CIF is absent in a PDCCH. The PDCCH on a scheduling cell allocates a PDSCH/PUSCH resource on the same cell. That is, the scheduling cell is the same as a scheduled cell.
- CIF enabled: A CIF exists in a PDCCH. The PDCCH on scheduling may allocate a PDSCH/PUSCH resource on one of a plurality of cells using the CIF. A scheduling cell may be the same as or different from a scheduled cell. A PDSCH/PUSCH means a PDSCH or PUSCH.

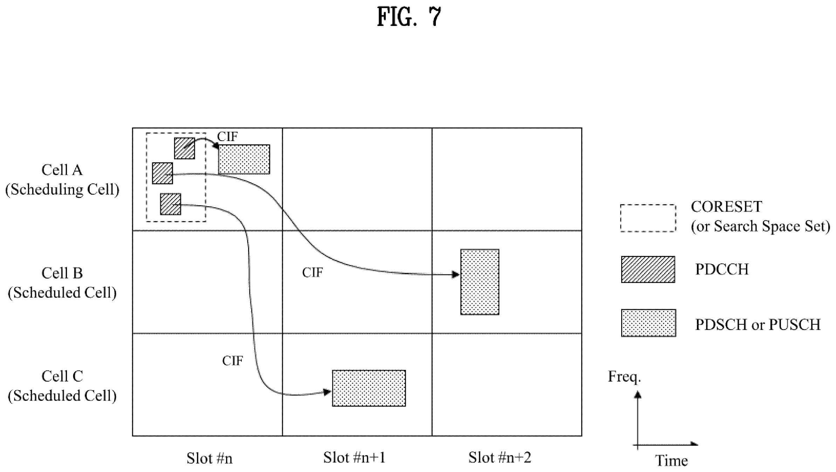

FIG. 7 is a diagram illustrating carrier aggregation. In FIG. 7, it is assumed that three cells are aggregated. If a CIF is disabled, only a PDCCH for scheduling its PDSCH/PUSCH may be transmitted in each cell (Self-Carrier Scheduling (SCS)). On the other hand, if a CIF is enabled by UE-specific (or UE-group-specific or cell-specific) higher layer signaling and cell A is configured as a scheduling cell, not only a PDCCH for scheduling a PDSCH/PUSCH of the cell A but also a PDCCH for scheduling a PDSCH/PUSCH of another cell (i.e., scheduled cell) may be transmitted in the cell A(Cross-Carrier Scheduling (CCS)). In this case, a PDCCH for scheduling a cell of its own is not transmitted in cell B/C.

### NR-shared spectrum/unlicensed band (NR-U) operation

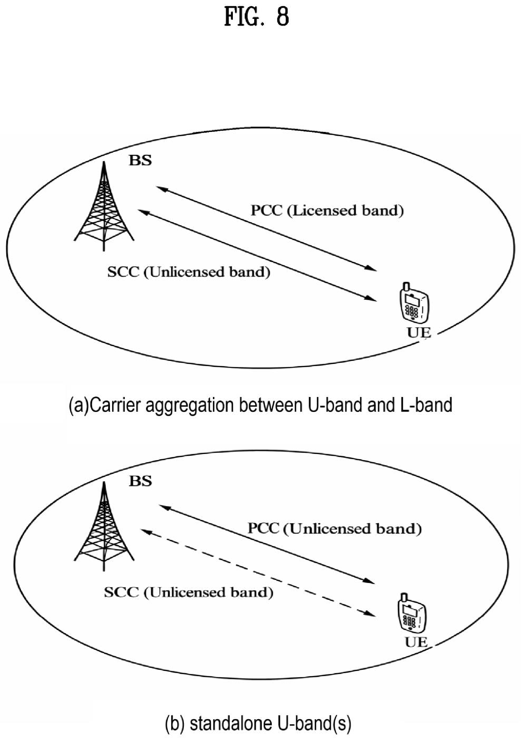

FIG. 8 illustrates a wireless communication system supporting an unlicensed band. For convenience, a cell operating in a licensed band (hereinafter, L-band) is defined as an LCell and a carrier of the LCell is defined as a (DL/UL) LCC. A cell operating in an unlicensed band (hereinafter, U-band) is defined as a UCell and a carrier of the UCell is defined as a (DL/UL) UCC. A carrier of a cell may represent an operating frequency (e.g., a center frequency) of the cell. A cell/carrier (e.g., CC) may generically be referred to as a cell.

When carrier aggregation is supported, one UE may transmit and receive signals to and from a BS in a plurality of aggregated cells/carriers. If a plurality of CCs is configured for one UE, one CC may be configured as a primary CC (PCC) and the other CCs may be configured as secondary CCs (SCCs). Specific control information/channels (e.g., a CSS PDCCH and PUCCH) may be configured to transmit and receive signals only in the PCC. Data may be transmitted and received in the PCC and/ or the SCCs. In FIG. 8(a), the UE and the BS transmit and receive signals in the LCC and the UCC (non-standalone (NSA) mode). In this case, the LCC may be configured as the PCC and the UCC may be configured as the SCC. If a plurality of LCCs is configured for the UE, one specific LCC may be configured as the PCC and the other LCCs may be configured as the SCCs. FIG. 8(a) corresponds to LAA of the 3GPP LTE system. FIG. 8(b) illustrates the case in which the UE and the BS transmit and receive signals in one or more UCCs without the LCC (SA mode). In this case, one of the UCCs may be configured as the PCC and the other UCCs may be configured as the SCCs. To this end, PUCCH, PUSCH, PRACH transmission can be supported. Both the NSA mode and the SA mode may be supported in an unlicensed band of the 3GPP NR system.

### HARQ-ACK feedback related to DCI for simultaneously scheduling multiple cells

New Radio (NR) supports a wide range of spectrum across various frequency ranges. Use of spectrum for 5G-Advanced is expected to increase through reuse (re-farming) of frequency bands used in previous generations. Particularly, in the case of frequency range 1 (FR1), which is a low-frequency band, available spectrum blocks tend to become more segmented and dispersed. In the case of frequency range 2 (FR2) and some FR1 bands, available spectrum may become wider, and thus operation of multiple carriers/cells within a band may be required. There is a need to improve throughput and coverage by using such dispersed spectrum bands or wider-bandwidth spectrum in a more power-efficient and flexible manner.

When data is scheduled across multiple cells including intra-band cells and inter-band cells, it is important to improve flexibility and spectrum/power efficiency. However, in a current 5G NR scheduling scheme, DCI may schedule only a PUSCH or a PDSCH for one cell. With future spectrum expansion/change, a need for simultaneous scheduling of multiple cells is expected to increase. To reduce control overhead caused by scheduling, it is advantageous to perform scheduling of PUSCHs/PDSCHs of multiple cells through a single DCI.

Accordingly, in a carrier aggregation (CA) situation in which multiple cells are configured, a multi-cell scheduling scheme for simultaneously scheduling a plurality of (serving) cells/component carriers (CCs) (and PDSCH/PUSCH transmissions through the cells/CCs) through a single DCI may be considered in Release 18 to reduce DCI overhead required for PDSCH/PUSCH scheduling.

Accordingly, the present disclosure proposes an efficient hybrid automatic repeat request-acknowledgement (HARQ-ACK) (for convenience, referred to as A/N) feedback configuration and transmission operation method in consideration of a situation in which a plurality of PDSCHs on a plurality of cells are simultaneously scheduled based on downlink control information (DCI) (multi-cell DCI) for performing the above-described multi-cell scheduling. In the present disclosure, although a multi-cell scheduling operation for PDSCH transmission or PUSCH transmission is mainly described, the operating principle of the proposed method may be equally applied to multi-cell scheduling for PUSCH transmission or PDSCH transmission. In addition, in the present disclosure, a cell may mean an (active) bandwidth part (BWP) configured/indicated for the cell.

Hereinafter, multi-cell scheduling DCI may be referred to as multi-cell DCI or simply DCI, and may include at least one of downlink (DL) grant DCI for scheduling a PDSCH and uplink (UL) grant DCI for scheduling a PUSCH.

As described above, unlike an existing single-cell (SC) scheduling scheme in which only a PDSCH on a single cell is scheduled through one DCI, introduction of a multi-cell (MC) scheduling scheme in which a plurality of PDSCHs on a plurality of cells are simultaneously scheduled through one DCI is under consideration.

In Release 16 NR, an SCell dormancy indication was introduced for power saving of a UE, and the UE may reduce power consumption by omitting monitoring of a PDCCH for an SCell for which dormancy is indicated. However, channel state information (CSI)/radio resource management (RRM) measurement is performed in the corresponding SCell. Such an SCell dormancy indication is provided through DCI that does not schedule a PDSCH, and the UE transmits a 1-bit acknowledgement (ACK) for the SCell dormancy indication.

A condition under which an SCell dormancy indication is provided through existing SC scheduling DCI (SC DCI) corresponds to a case in which "a one-shot HARQ-ACK request field is absent or a value of the one-shot HARQ-ACK request field is '0', a HARQ-ACK retransmission indicator field is absent or a value of the HARQ-ACK retransmission indicator field is '0', and an invalid value is indicated in a frequency domain resource assignment (FDRA) field." In this case, SCell dormancy information (e.g., a bitmap providing information on an SCell group for which SCell dormancy is indicated) may be indicated through a specific field combination (for example, a modulation and coding scheme (MCS), a new data indicator (NDI), a redundancy version (RV), a HARQ process number (HPN), antenna port(s) (AP(s)), and a demodulation reference signal (DMRS) sequence initialization field (for transport block (TB) 1)).

A condition under which an SCell dormancy indication is provided through MC scheduling DCI (MC DCI) may correspond to a case in which (i) "a one-shot HARQ-ACK request field is absent or a value of the one-shot HARQ-ACK request field is '0', (ii) a HARQ-ACK retransmission indicator field is absent or a value of the HARQ-ACK retransmission indicator field is '0', and an FDRA field is indicated with an invalid value for at least one cell (among cells for which scheduling information is indicated through the MC DCI)." In this case, SCell dormancy information may be indicated through a specific field combination corresponding to a cell having the smallest (or largest) cell index among cells for which the invalid FDRA value is indicated (reference cell) (for example, an MCS/NDI/RV/HPN field and/or an AP (and/or DMRS) field (for TB 1)).

As fields configured in the MC DCI, 1) a Type-1A field having a form in which only one common field is configured for a plurality of cells and a value indicated through the one common field is commonly applied to the plurality of cells, and 2) a Type-2 field having a form in which an individual field is configured for each of a plurality of cells and a value indicated by each field is individually applied to a corresponding cell may be considered. In the above example, MCS/NDI/RV/HPN may be configured as Type-2 fields, DMRS may be configured as a Type-1A field, and AP may be configured as one of Type-1A and Type-2.

In the MC DCI, an FDRA field may be individually configured for each of a plurality of cells (Type-2 field), and in this case, a per-cell FDRA field may be referred to as an FDRA block. An invalid FDRA value may mean a value different from an FDRA value for PDSCH/PUSCH scheduling in a per-cell FDRA block (e.g., all 1s or all 0s). For cell(s) for which an invalid FDRA value is indicated, there is no PDSCH/PUSCH scheduling, and the UE/BS does not transmit/receive a PDSCH/PUSCH in the corresponding cell(s).

Accordingly, if an invalid FDRA value is indicated only for some cells (among cells for which scheduling information is indicated by the MC DCI), the AP field may be used for indicating SCell dormancy (in addition to the MCS/NDI/RV/HPN fields) only when the AP field is configured as Type-2 (whereas, when the AP field is configured as Type-1A, the AP field may not be used for the purpose). In this case, the DMRS field may not be used.

Otherwise, if an invalid FDRA value is indicated for all cells (for which scheduling information is indicated by the MC DCI), the AP field may be used for indicating SCell dormancy (in addition to the MCS/NDI/RV/HPN fields) regardless of whether the AP field is configured as Type-1A or Type-2 (for example, even when the AP field is configured as Type-1A). In this case, the DMRS field may also be used.

A condition under which a HARQ-ACK retransmission operation is triggered through existing SC DCI corresponds to a case in which "a value of a HARQ-ACK retransmission indicator field is indicated as '1'," and in this case, slot offset information for determining a target slot for the HARQ-ACK retransmission may be indicated through a specific field (for example, an MCS field (for TB 1)).

A condition under which a HARQ-ACK retransmission operation is triggered through the MC DCI may correspond to a case in which "a value of a HARQ-ACK retransmission indicator field is '1' and an FDRA field is indicated with an invalid value for at least one cell (among cells for which scheduling information is indicated by the MC DCI)," and in this case, slot offset information for determining a target slot for the HARQ-ACK retransmission may be indicated through a specific field corresponding to a cell having the smallest (or largest) cell index among cells for which an invalid FDRA value is indicated (for example, an MCS field (for TB 1)).

As another method, while a condition under which a HARQ-ACK retransmission operation is triggered through the MC DCI is defined as "a value of a HARQ-ACK retransmission indicator field is indicated as '1'," if at least one cell is indicated with an invalid FDRA value (among cells for which scheduling information is indicated by the MC DCI) while satisfying the condition, slot offset information may be indicated through an MCS field (for TB 1) corresponding to a cell having the smallest (or largest) cell index among cells for which the invalid FDRA value is indicated.

Otherwise, if no cell is indicated with an invalid FDRA value (among cells for which scheduling information is indicated by the MC DCI) while satisfying the condition (that is, when a valid FDRA value is indicated for all cells), slot offset information may be indicated through an MCS field (for TB 1) corresponding to a cell having the largest (or smallest) cell index (for convenience, referred to as "cell A") among all the cells (for which the valid FDRA value is indicated), and in this case, the UE may operate by assuming that no PDSCH is scheduled for cell A (for example, by omitting reception of a PDSCH on cell A and omitting corresponding HARQ-ACK feedback or mapping the corresponding HARQ-ACK feedback to a NACK).

When an SCell dormancy indication and a HARQ-ACK retransmission indication are received through existing SC DCI, the UE maps an ACK to the DCI reception and transmits HARQ-ACK feedback including the ACK to the BS.

When an SCell dormancy indication and/or a HARQ-ACK retransmission operation is indicated through the MC DCI (for example, through a specific field (combination) (such as an MCS field) corresponding to a specific reference cell (e.g., a specific cell (e.g., a cell having the smallest (or largest) cell index) among the cells for which the invalid FDRA value is indicated)), the MC DCI may indicate the operation and simultaneously perform PDSCH scheduling for one or more cells (for which a valid FDRA value is indicated), and accordingly, a HARQ-ACK payload corresponding to the MC DCI may include a plurality of HARQ-ACK bits for a plurality of cells.

Therefore, in this case, a rule for mapping/configuring HARQ-ACK feedback (e.g., ACK) for an SCell dormancy indication and a HARQ-ACK retransmission indication through the MC DCI may be required. To this end, the following methods may be considered.

In the following, a HARQ-ACK payload may mean a HARQ-ACK payload (or a sub-codebook) corresponding to one MC DCI in a specific (e.g., Type-2) HARQ-ACK codebook configuration situation, and the size of the HARQ-ACK payload may be determined based on a maximum number of cells capable of being simultaneously scheduled through one MC DCI within one PUCCH (cell) group (when there is no cell for which transmission of up to two TBs per PDSCH is configured, or when spatial bundling for HARQ-ACK is configured) or a maximum number of TBs (when there is a cell for which transmission of up to two TBs per PDSCH is configured and spatial bundling for HARQ-ACK is not configured).

### (1) Alt 1: when both HARQ-ACK bits corresponding to cells for which valid FDRA values are indicated (through MC DCI) and HARQ-ACK bits corresponding to cells for which invalid FDRA values are indicated are configured in a HARQ-ACK payload (sequentially from the most significant bit (MSB) according to a cell index order)

An ACK for an SCell dormancy indication and a HARQ-ACK retransmission (slot offset) indication may be mapped to a HARQ-ACK bit corresponding to a specific cell index associated with an MCS field through which the information is indicated (for example, the reference cell) (TB 1 of the corresponding cell).

If invalid FDRA values are indicated for all cells (for which scheduling information is indicated by the MC DCI), the ACK for the SCell dormancy indication and the HARQ-ACK retransmission (slot offset) indication may be mapped to the first MSB bit in the payload (when Alt 1 is applied).

### (2) Alt 2: when only HARQ-ACK bits corresponding to cells for which valid FDRA values are indicated (through MC DCI) are configured in a HARQ-ACK payload (sequentially from the MSB according to a cell index order)

An ACK for an SCell dormancy indication and a HARQ-ACK retransmission (slot offset) indication may be mapped to the last least significant bit (LSB) in the payload (Alt 2-1), mapped to a (single) bit positioned immediately after bit(s) corresponding to cells for which valid FDRA values are indicated (Alt 2-2), repeatedly mapped to all bit(s) positioned after bit(s) corresponding to cells for which valid FDRA values are indicated (Alt 2-3), or mapped to the last LSB bit among bit(s) corresponding to all cells when it is assumed that valid FDRA values are indicated for all cells (for which scheduling information is indicated by the MC DCI) (Alt 2-4).

If invalid FDRA values are indicated for all cells (for which scheduling information is indicated by the MC DCI), the ACK for the SCell dormancy indication and the HARQ-ACK retransmission (slot offset) indication may be mapped to the last LSB bit in the payload (when Alt 2-1 is applied), mapped to the first MSB bit (when Alt 2-2 is applied), repeatedly mapped to all bits in the payload (when Alt 2-3 is applied), or mapped to the last LSB bit among bit(s) corresponding to all cells when it is assumed that valid FDRA values are indicated for all the cells (when Alt 2-4 is applied).

### (3) Alt 3: when only HARQ-ACK bits corresponding to cells for which valid FDRA values are indicated (through MC DCI) are configured in a HARQ-ACK payload (sequentially from the MSB according to a cell index order)

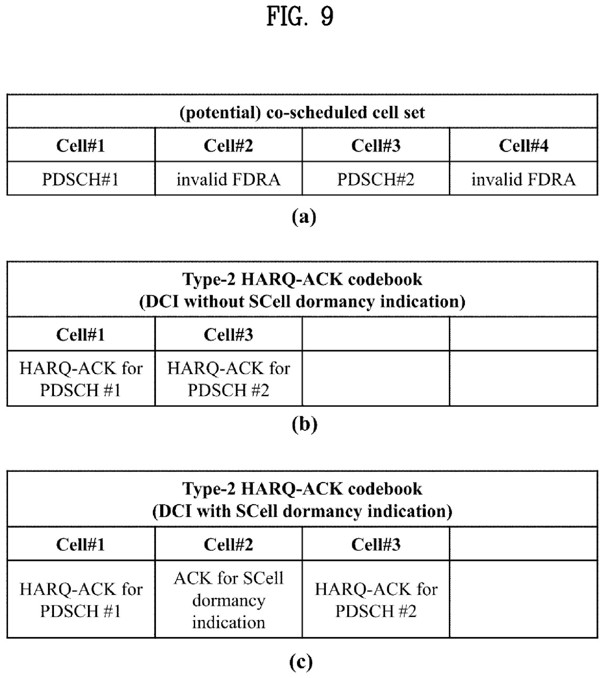

A HARQ-ACK codebook configuration according to Alt 3 will be described with reference to FIG. 9. It is assumed, as shown in FIG. 9(a), that, through MC DCI, PDSCH#1 is scheduled for Cell #1, an invalid FDRA value is indicated for Cell #2, PDSCH#2 is scheduled for Cell #3, and an invalid FDRA value is indicated for Cell #4.

FIG. 9(b) illustrates a configuration of a HARQ-ACK codebook according to Alt 3 when no SCell dormancy indication is indicated through MC DCI. HARQ-ACKs for Cell #1 and Cell #3, for which valid FDRA values are indicated and PDSCH#1 and PDSCH#2 are respectively scheduled, may be included in the HARQ-ACK codebook. In this case, the HARQ-ACK for PDSCH#1 on Cell #1 having the lower cell index may be mapped first, and the HARQ-ACK for PDSCH#2 on Cell #3 may then be mapped. When transmission of up to two TBs per PDSCH is configured and spatial bundling is not configured, the HARQ-ACK for the PDSCH of the corresponding cell is 2 bits (i.e., 1 HARQ-ACK bit for each TB). In contrast, when transmission of up to one TB per PDSCH is configured, or even when two-TB transmission is configured but spatial bundling is configured, the HARQ-ACK for the PDSCH of the corresponding cell is 1 bit. In addition, as described above, the size of the HARQ-ACK codebook may be determined based on a maximum number of cells capable of being simultaneously scheduled through one MC DCI (when there is no cell for which transmission of up to two TBs per PDSCH is configured, or when spatial bundling for HARQ-ACK is configured) or a maximum number of TBs (when there is a cell for which transmission of up to two TBs per PDSCH is configured and spatial bundling for HARQ-ACK is not configured). When only HARQ-ACKs for cells for which valid FDRA values are indicated are mapped according to a cell index order in the HARQ-ACK codebook having the determined size, bits to which no HARQ-ACK is mapped may remain in the HARQ-ACK codebook. A value of 0 may be set for the remaining bits to which no HARQ-ACK is mapped. That is, the UE may map only HARQ-ACKs for cells for which valid FDRA values are indicated according to a cell index order, and then perform 0 padding until the determined HARQ-ACK codebook size is reached. Since a value of 0 is a HARQ-ACK bit value corresponding to a NACK, such a UE operation may be understood as mapping NACKs for cells for which invalid FDRA values are indicated. The UE may perform an operation of mapping HARQ-ACKs for cells for which valid FDRA values are indicated according to a cell index order and then mapping NACKs for cells for which invalid FDRA values are indicated.

As an exception, when an SCell dormancy indication and/or a HARQ-ACK retransmission (slot offset) indication is indicated through MC DCI, the payload may be configured to include both HARQ-ACK bits corresponding to cells for which valid FDRA values are indicated and HARQ-ACK bits corresponding to cells for which invalid FDRA values are indicated (or the reference cell among the cells), and an ACK for the SCell dormancy indication and the HARQ-ACK retransmission (slot offset) indication may be mapped (to the HARQ-ACK bit corresponding to the reference cell) by applying Alt 1. In other words, when an SCell dormancy indication is indicated, an ACK (HARQ-ACK for the SCell dormancy indication) may be exceptionally mapped only to the reference cell having the smallest cell index among cells for which invalid FDRA values are indicated, by applying Alt 1. The ACK for the SCell dormancy indication may be mapped in the HARQ-ACK codebook together with HARQ-ACKs for PDSCHs corresponding to valid FDRA values, and an order of the mapping may follow a cell index. FIG. 9(c) illustrates an example of a HARQ-ACK codebook configuration when an SCell dormancy indication is indicated. Referring to FIG. 9(c), among Cell #2 and Cell #4 for which invalid FDRA values are indicated, Cell #2 has the smallest cell index, and thus Cell #2 becomes the reference cell. Accordingly, a HARQ-ACK for the SCell dormancy indication (that is, an ACK) is mapped to a position corresponding to Cell #2. Since the HARQ-ACK for the SCell dormancy indication is a 1-bit ACK rather than a NACK, a UE operation of mapping the ACK for Cell #2, which is the reference cell for which the invalid FDRA value is indicated, is equivalent to a UE operation of correctly receiving/decoding one TB (e.g., TB1) of a PDSCH on Cell #2, which is the reference cell for which the invalid FDRA value is indicated. Accordingly, when an SCell dormancy indication is indicated, the UE may also be described as performing an operation of configuring the HARQ-ACK codebook on the assumption that the UE correctly receives/decodes one TB (e.g., TB1) of a PDSCH on Cell #2, which is the reference cell for which the invalid FDRA value is indicated.

If invalid FDRA values are indicated for all cells (for which scheduling information is indicated by the MC DCI), the ACK for the SCell dormancy indication and the HARQ-ACK retransmission (slot offset) indication may be mapped to the first MSB bit in the payload (when Alt 3 is applied).

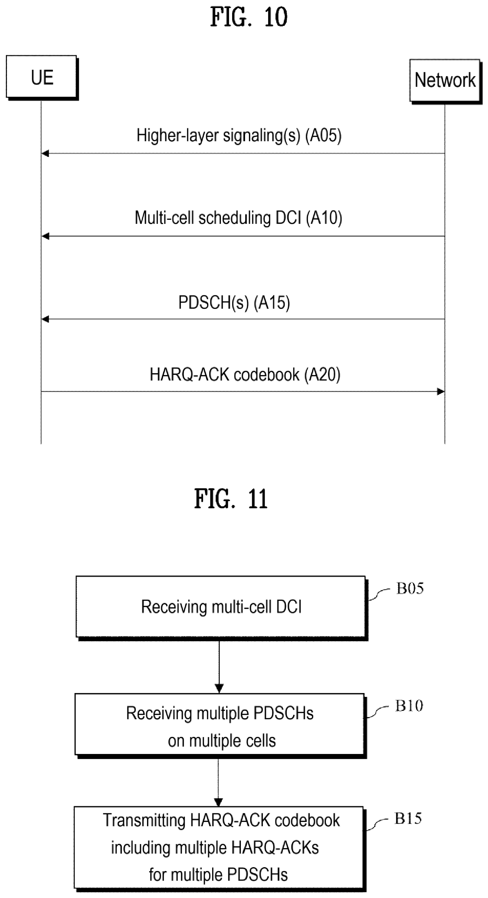

FIG. 10 is a diagram for explaining signal transmission and reception between a network and a UE according to an embodiment.

Referring to FIG. 10, the UE may receive higher-layer signaling (e.g., radio resource control (RRC)) from the network at least once (A05). Information provided through the higher-layer signaling may include at least one of information for configuring a plurality of cells for the UE, configuration information related to MC DCI for the UE, and configuration information for a HARQ-ACK codebook, but the present disclosure is not limited thereto. For convenience of description, it is assumed that a Type 2 HARQ-ACK codebook is configured for the UE.

The UE may receive the MC DCI from the network (A10). The MC DCI may schedule a plurality of PDSCHs on a plurality of cells. The MC DCI may not include an SCell dormancy indication field. The UE may determine that SCell dormancy is indicated through the MC DCI based on that, in the MC DCI not including the SCell dormancy indication field, (i) a one-shot HARQ-ACK request field is not provided or has a value of 0, (ii) a HARQ-ACK retransmission indicator field is not provided or has a value of 0, and an invalid FDRA value is set in FDRA information for at least one cell. Based on the determination that SCell dormancy is indicated, the UE may acquire information for the SCell dormancy (e.g., a bitmap indicating an SCell group for SCell dormancy) through MCS, RV, and NDI information for TB 1 of the reference cell having the smallest cell index among at least one cell for which the invalid FDRA value is indicated.

The UE may receive a PDSCH on cells for which valid FDRA values are indicated (A15).

The UE may transmit a Type 2 HARQ-ACK codebook including HARQ-ACKs for the received PDSCHs (A20). In the Type 2 HARQ-ACK codebook, the HARQ-ACKs for the PDSCHs and the ACK for the SCell dormancy indication may be sequentially/continuously mapped from the MSB in an ascending order of cell indices.

FIG. 11 illustrates a flow of a method performed by a UE according to an embodiment.

Referring to FIG. 11, the UE may receive DCI for scheduling a plurality of PDSCHs on a plurality of cells (B05).

The UE may receive the plurality of PDSCHs on the plurality of cells based on the DCI (B10).

The UE may transmit a HARQ-ACK codebook including a plurality of HARQ-ACKs for the plurality of PDSCHs (B15).

The plurality of HARQ-ACKs may be mapped in a cell index order in the HARQ-ACK codebook.

Based on that (i) the DCI provides a specific FDRA value that is not a valid FDRA value for PDSCH scheduling for at least one cell other than the plurality of cells, and (ii) the DCI provides information for an SCell dormancy indication, the UE may map an ACK for the SCell dormancy indication in the HARQ-ACK codebook together with the plurality of HARQ-ACKs.

In the HARQ-ACK codebook, a mapping position of the ACK for the SCell dormancy indication may be determined based on a cell index of a first cell having the smallest cell index among the at least one cell for which the specific FDRA value is provided.

In the HARQ-ACK codebook, the plurality of HARQ-ACKs and the ACK for the SCell dormancy indication may be arranged in a cell index order based on cell indices of the plurality of cells and the cell index of the first cell.

In the HARQ-ACK codebook, the ACK for the SCell dormancy indication may be mapped to a HARQ-ACK corresponding to one TB of the first cell.

For remaining cells other than the first cell among the at least one cell for which the specific FDRA value is provided, no ACK may be mapped in the HARQ-ACK codebook.

In the DCI providing the information for the SCell dormancy indication, a one-shot HARQ-ACK request field may not be provided or may have a value of 0, a HARQ-ACK retransmission indicator field may not be provided or may have a value of 0, and the specific FDRA value may be provided in FDRA information for the at least one cell.

The information for the SCell dormancy indication may be provided through MCS information, NDI information, and RV information for a first TB of the first cell having the smallest cell index among the at least one cell for which the specific FDRA value is provided.

The HARQ-ACK codebook may be a Type-2 HARQ-ACK codebook.

The size of the HARQ-ACK codebook may be determined based on at least one of a maximum number of cells capable of being scheduled together through the DCI and a maximum number of TBs.

A PDSCH may not be scheduled through the DCI on the at least one cell for which the specific FDRA value is provided.

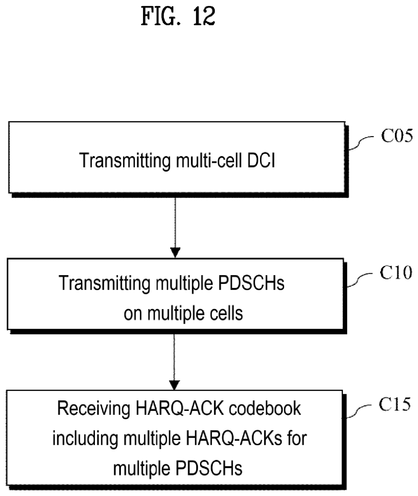

FIG. 12 illustrates a flow of a method performed by a BS according to an embodiment.

Referring to FIG. 12, the BS may transmit DCI for scheduling a plurality of PDSCHs on a plurality of cells (C05).

The BS may transmit the plurality of PDSCHs on the plurality of cells (C10).

The BS may receive a HARQ-ACK codebook including a plurality of HARQ-ACKs for the plurality of PDSCHs (C15).

The plurality of HARQ-ACKs may be mapped in a cell index order in the HARQ-ACK codebook.

Based on that (i) the DCI provides a specific FDRA value that is not a valid FDRA value for scheduling a PDSCH for at least one cell other than the plurality of cells, and (ii) the DCI provides information for an SCell dormancy indication, the BS may receive an ACK for the SCell dormancy indication together with the plurality of HARQ-ACKs through the HARQ-ACK codebook.

In the HARQ-ACK codebook, a mapping position of the ACK for the SCell dormancy indication may be determined based on a cell index of a first cell having the smallest cell index among the at least one cell for which the specific FDRA value is provided.

In the HARQ-ACK codebook, the plurality of HARQ-ACKs and the ACK for the SCell dormancy indication may be arranged in a cell index order based on cell indices of the plurality of cells and the cell index of the first cell.

In the HARQ-ACK codebook, the ACK for the SCell dormancy indication may be mapped to a HARQ-ACK for one TB of the first cell.

For remaining cells other than the first cell among the at least one cell for which the specific FDRA value is provided, no ACK may be mapped in the HARQ-ACK codebook.

In the DCI providing the information for the SCell dormancy indication, a one-shot HARQ-ACK request field may not be provided or may have a value of 0, a HARQ-ACK retransmission indicator field may not be provided or may have a value of 0, and the specific FDRA value may be provided in FDRA information for the at least one cell.

The information for the SCell dormancy indication may be provided through MCS information, NDI information, and RV information for a first TB of the first cell having the smallest cell index among the at least one cell for which the specific FDRA value is provided.

The HARQ-ACK codebook may be a Type-2 HARQ-ACK codebook.

The size of the HARQ-ACK codebook may be determined based on at least one of a maximum number of cells capable of being scheduled together through the DCI and a maximum number of TBs.

A PDSCH may not be scheduled through the DCI on the at least one cell for which the specific FDRA value is provided.

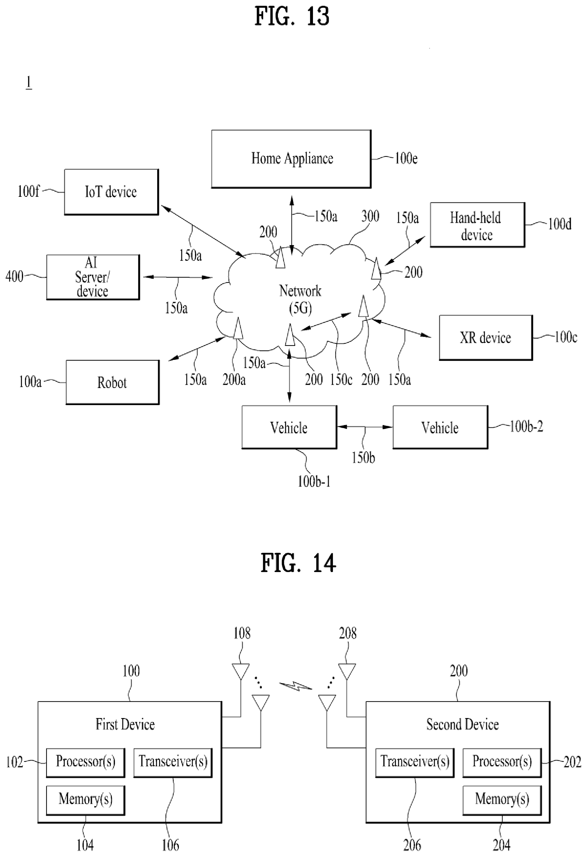

FIG. 13 illustrates a communication system 1 applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

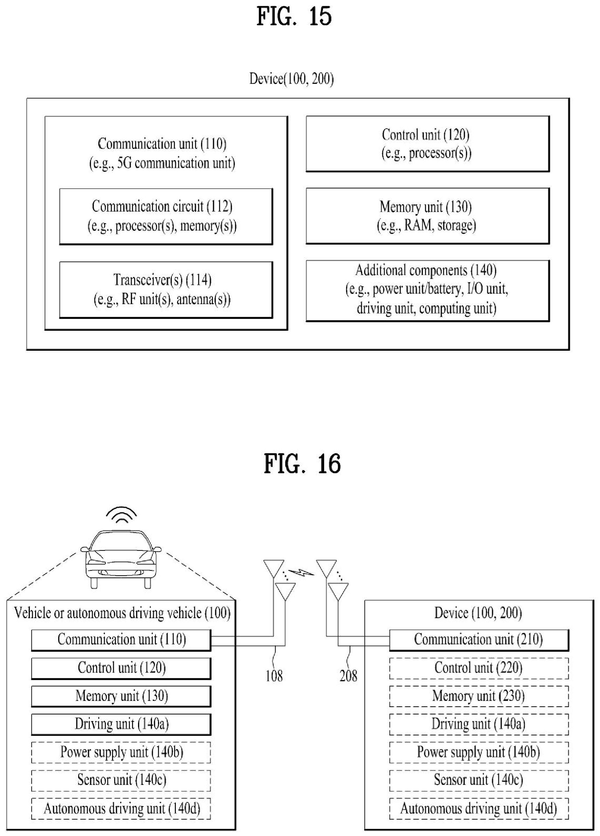

FIG. 15 illustrates another example of a wireless device applied to the present disclosure. The wireless device may be implemented in various forms according to a use-case/service (refer to FIG. 13).

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast user equipment, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method performed by a user equipment (UE), the method comprising:
receiving downlink control information (DCI) for scheduling a plurality of physical downlink shared channels (PDSCHs) on a plurality of cells;
receiving the plurality of PDSCHs on the plurality of cells based on the DCI; and
transmitting a hybrid automatic repeat request-acknowledgement (HARQ-ACK) codebook including a plurality of HARQ-ACKs for the plurality of PDSCHs,
wherein the plurality of HARQ-ACKs are mapped in a cell index order in the HARQ-ACK codebook,
wherein, based on (i) the DCI providing, for at least one cell other than the plurality of cells, a specific frequency domain resource allocation (FDRA) value that is not a valid FDRA value for PDSCH scheduling, and (ii) the DCI providing information for a secondary cell (SCell) dormancy indication, the UE maps an acknowledgement (ACK) for the SCell dormancy indication in the HARQ-ACK codebook together with the plurality of HARQ-ACKs, and
wherein a mapping position of the ACK for the SCell dormancy indication in the HARQ-ACK codebook is determined based on a cell index of a first cell having a smallest cell index among the at least one cell for which the specific FDRA value is provided.

2. The method of claim 1, wherein, in the HARQ-ACK codebook, the plurality of HARQ-ACKs and the ACK for the SCell dormancy indication are arranged in a cell index order based on cell indices of the plurality of cells and the cell index of the first cell.

3. The method of claim 1, wherein, in the HARQ-ACK codebook, the ACK for the SCell dormancy indication is mapped to a HARQ-ACK for one transport block (TB) of the first cell.

4. The method of claim 1, wherein, for remaining cells other than the first cell among the at least one cell for which the specific FDRA value is provided, no ACK is mapped in the HARQ-ACK codebook.

5. The method of claim 1, wherein, in the DCI providing the information for the SCell dormancy indication, a one-shot HARQ-ACK request field is not provided or has a value of 0, a HARQ-ACK retransmission indicator field is not provided or has a value of 0, and the specific FDRA value is set in FDRA information for the at least one cell.

6. The method of claim 1, wherein the information for the SCell dormancy indication is provided through modulation and coding scheme (MCS) information, new data indicator (NDI) information, and redundancy version (RV) information for a first transport block (TB) of the first cell having the smallest cell index among the at least one cell for which the specific FDRA value is provided.

7. The method of claim 1, wherein the HARQ-ACK codebook is a Type-2 HARQ-ACK codebook.

8. The method of claim 1, wherein a size of the HARQ-ACK codebook is determined based on at least one of a maximum number of cells capable of being scheduled together through the DCI and a maximum number of transport blocks (TBs).

9. The method of claim 1, wherein a PDSCH is not scheduled through the DCI on the at least one cell for which the specific FDRA value is provided.

10. A non-transitory computer-readable recording medium having recorded thereon instructions that, when executed by a processor of a user equipment (UE), cause the UE to perform the method of claim 1.

11. A device comprising:
a memory storing instructions; and
a processor configured to perform operations by executing the instructions,
wherein the operations of the processor comprise:
receiving downlink control information (DCI) for scheduling a plurality of physical downlink shared channels (PDSCHs) on a plurality of cells;
receiving the plurality of PDSCHs on the plurality of cells based on the DCI; and
transmitting a hybrid automatic repeat request-acknowledgement (HARQ-ACK) codebook including a plurality of HARQ-ACKs for the plurality of PDSCHs,
wherein the plurality of HARQ-ACKs are mapped in a cell index order in the HARQ-ACK codebook,
wherein, based on (i) the DCI providing, for at least one cell other than the plurality of cells, a specific frequency domain resource allocation (FDRA) value that is not a valid FDRA value for PDSCH scheduling, and (ii) the DCI providing information for a secondary cell (SCell) dormancy indication, the device maps an acknowledgement (ACK) for the SCell dormancy indication in the HARQ-ACK codebook together with the plurality of HARQ-ACKs, and
wherein a mapping position of the ACK for the SCell dormancy indication in the HARQ-ACK codebook is determined based on a cell index of a first cell having a smallest cell index among the at least one cell for which the specific FDRA value is provided.

12. The device of claim 11, further comprising a transceiver,
wherein the device is a user equipment (UE) for wireless communication.

13. The device of claim 11, wherein the device is a processing device configured to control a user equipment (UE) for wireless communication.

14. A method performed by a base station (BS), the method comprising:
transmitting downlink control information (DCI) for scheduling a plurality of physical downlink shared channels (PDSCHs) on a plurality of cells;
transmitting the plurality of PDSCHs on the plurality of cells; and
receiving a hybrid automatic repeat request-acknowledgement (HARQ-ACK) codebook including a plurality of HARQ-ACKs for the plurality of PDSCHs,
wherein the plurality of HARQ-ACKs are mapped in a cell index order in the HARQ-ACK codebook,
wherein, based on (i) the DCI providing, for at least one cell other than the plurality of cells, a specific frequency domain resource allocation (FDRA) value that is not a valid FDRA value for PDSCH scheduling, and (ii) the DCI providing information for a secondary cell (SCell) dormancy indication, the BS receives an acknowledgement (ACK) for the SCell dormancy indication together with the plurality of HARQ-ACKs through the HARQ-ACK codebook, and
wherein a mapping position of the ACK for the SCell dormancy indication in the HARQ-ACK codebook is determined based on a cell index of a first cell having a smallest cell index among the at least one cell for which the specific FDRA value is provided.

15. A base station (BS) comprising:
a memory storing instructions; and
a processor configured to perform operations by executing the instructions,
wherein the operations of the processor comprise:
transmitting downlink control information (DCI) for scheduling a plurality of physical downlink shared channels (PDSCHs) on a plurality of cells;
transmitting the plurality of PDSCHs on the plurality of cells; and
receiving a hybrid automatic repeat request-acknowledgement (HARQ-ACK) codebook including a plurality of HARQ-ACKs for the plurality of PDSCHs,
wherein the plurality of HARQ-ACKs are mapped in a cell index order in the HARQ-ACK codebook,
wherein, based on (i) the DCI providing, for at least one cell other than the plurality of cells, a specific frequency domain resource allocation (FDRA) value that is not a valid FDRA value for PDSCH scheduling, and (ii) the DCI providing information for a secondary cell (SCell) dormancy indication, the BS receives an acknowledgement (ACK) for the SCell dormancy indication together with the plurality of HARQ-ACKs through the HARQ-ACK codebook, and
wherein a mapping position of the ACK for the SCell dormancy indication in the HARQ-ACK codebook is determined based on a cell index of a first cell having a smallest cell index among the at least one cell for which the specific FDRA value is provided.
